(19) Europäisches Patentamt
European Patent Office
Office européen des brevets

(11) EP 3 889 662 A1

# (12) EUROPEAN PATENT APPLICATION

(43) Date of publication:
**06.10.2021 Bulletin 2021/40**

(51) Int Cl.:
***G02B 21/00*** *(2006.01)* ***G02B 21/08*** *(2006.01)*

(21) Application number: **20168037.8**

(22) Date of filing: **03.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Leica Microsystems CMS GmbH**
**35578 Wetzlar (DE)**

(72) Inventor: **Dr. Gugel, Hilmar**
**69221 Dossenheim (DE)**

(74) Representative: **Schaumburg und Partner Patentanwälte mbB**
**Postfach 86 07 48**
**81634 München (DE)**

## (54) OPTICAL ILLUMINATION SYSTEM FOR A MICROSCOPE AND MICROSCOPE

(57) An optical illumination system (102, 304) for a microscope (100, 300), comprising an optical fiber (114, 302) configured to form an illumination light beam (110) that is emitted from a fiber end (116) thereof, and an optical intermediate imaging system (118, 306). The optical intermediate imaging system (118, 306) is configured to form an optical image of the fiber end (116) in an entrance pupil (112) of an objective (104) of the microscope (100, 300) and to form a predetermined number of intermediate optical images between the fiber end (116) and the entrance pupil (112). An increase of a mode field diameter of the optical fiber (114, 302) with an increasing wavelength of the illumination light beam (110) is less than 0.03 %/nm and the predetermined number of intermediate optical images is an even number. Alternatively, an increase of the mode field diameter of the optical fiber (114, 302) with an increasing wavelength of the illumination light beam (110) is greater than or equal to 0.03 %/nm and the predetermined number of intermediate optical images is an odd number.

114
102
100
116/200
120
202
110
118
122
128
136
138
108
204
130
140
124
118
132
134
126
104
206
112
106

Fig. 1

EP 3 889 662 A1

## Description

### Technical field

The invention relates to an optical illumination system for a microscope. The invention further relates to a microscope.

### Background

In microscopes, in particular laser scanning microscopes, laser light is used for illumination and/or manipulation of a specimen. The laser light is created by a laser light source and coupled into the microscope by means of an optical fiber. In order to illuminate and/or manipulate the specimen with the laser light an illumination light beam is formed at a fiber end of the optical fiber. The illumination light beam is then directed into an entrance pupil of an objective of the microscope and directed onto or into the specimen by means of said objective.

It is essential to have a uniform illumination of the entrance pupil by the illumination light beam in order to optimally use the laser light. If the illumination is not uniform it might be necessary to over illuminate the entrance pupil which might require an expensive high powered laser light source in some cases. In order to achieve a uniform illumination, the illumination light beam needs to have a certain beam diameter at the entrance pupil. This beam diameter is essentially dependent on the mode field diameter of the optical fiber which determines beam diameter at the fiber end. However, said mode field diameter often depends on the wavelength of the laser light used. This means that if e.g. a supercontinuum laser, a white light laser, or more than one laser light source with different wavelengths are used, the uniform illumination of the entrance pupil cannot be guaranteed.

However, in some applications, e.g. fluorescence correlation spectroscopy, it is advantageous to keep a resolution or a focus volume independent of the wavelength of the illumination light. This requires a controlled over illumination or under illumination of the entrance pupil, respectively.

### Summary

It is an objective to provide an optical illumination system for a microscope and/or a spectroscope allowing for an optimized illumination of an entrance pupil of an objective of the microscope or the spectroscope, respectively.

The aforementioned object is achieved by the subject-matter according to the independent claims. Advantageous embodiments are defined in the dependent claims and the following description.

An optical illumination system for a microscope comprises an optical fiber configured to form an illumination light beam that is emitted from a fiber end thereof, and an optical intermediate imaging system. The optical intermediate imaging system is configured to form an optical image of the fiber end in an entrance pupil of an objective of the microscope and to form a predetermined number of intermediate optical images between the fiber end and the entrance pupil. An increase of a mode field diameter of the optical fiber with an in-creasing wavelength of the illumination light beam is less than 0.03 %/nm and the predetermined number of intermediate optical images is an even number. Alternatively, an increase of the mode field diameter of the optical fiber with an increasing wavelength of the illumination light beam is greater than or equal to than 0.03 %/nm and the predetermined number of intermediate optical images is an odd number.

Preferably, the microscope is a laser scanning microscope. In particular, the microscope according to this aspect is not a fluorescence correlation spectroscope. In this application the mode field diameter is said to be essentially independent of the wavelength, if the increase of the mode field diameter of the optical fiber with an in-creasing wavelength of the illumination light beam is less than 0.03 %/nm.

The optical illumination system directs the illumination light beam into the entrance pupil of the objective of the microscope. For this purpose, the image of the fiber end is formed in the entrance pupil via the intermediate optical images. In both alternatives the beam diameter of the illumination light beam at the entrance pupil of the objective is essentially independent of the wavelength of the laser light used. Thus, a uniform illumination of the entrance pupil of the objective of the microscope is guaranteed to be independent of the wavelength.

The beam diameter of the illumination light beam at the entrance pupil of the objective is proportional to the mode field diameter of the optical fiber and independent of the wavelength, if the predetermined number of intermediate optical images is an even number. Thus, since the mode field diameter of the optical fiber is essentially independent of the wavelength, the beam diameter of the illumination light beam at the entrance pupil of the objective is essentially independent of the wavelength as well, i.e. less than 0.03 %/nm.

If the predetermined number of intermediate optical images is an odd number, the beam diameter of the illumination light beam at the entrance pupil of the objective is inversely proportional to the mode field diameter of the optical fiber and proportional to the wavelength. In this case the wavelength dependency of the mode field diameter and the wavelength dependency of the beam diameter counteract each other and the beam diameter of the illumination light beam at the entrance pupil of the objective is essentially independent of the wavelength.

The uniform illumination achieved by both alternatives allows the use of a low powered illumination light source in combination with the optical illumination system. The low powered illumination light sources are typically cheaper than high power illumination light sources.

In a preferred embodiment the optical intermediate imaging system comprises a first lens arranged at a distance from the fiber end being equal to a focal length of the first lens. In this embodiment the fiber end is located in the front focal point of the lens. Therefore, a focused image of the fiber end is imaged into the entrance pupil. Thus, allowing a uniform illumination of the entrance pupil with the illumination light beam formed at the fiber end.

In another preferred embodiment the optical intermediate imaging system comprises a first lens arranged at a distance from a first beam waist of the illumination light beam being equal to a focal length of the first lens. In this embodiment, the position of the first beam waist may or may not coincide with the position of the fiber end. In thin lens approximation the radius $W_0'$ of a second beam waist of the illumination light beam immediately following the first lens can be expressed in terms of the radius $W_0$ of the first beam waist, the focal length $f_1$ of the first lens and the wavelength $\lambda$ of the light of the illumination light as

$$w_0' = \frac{f_1 \times \lambda}{\pi \times w_o}.$$

In this embodiment the radius of the second beam waist can be precisely determined. Thus, the illumination of the entrance pupil can be precisely controlled.

In another preferred embodiment the optical intermediate imaging system comprises at least two lenses, one of which being the first lens. One of the at least two lenses immediately following a preceding lens of the at least two lenses along a propagation direction of the illumination light beam is arranged at a distance from the preceding lens being equal to the sum of a focal length of the preceding lens and a focal length of the following lens. In thin lens approximation the radius $W_0''$ of the beam waist of the illumination light beam after the lens immediately following the first lens can be expressed in terms of the radius $W_0'$ of the beam waist of the illumination light beam after the first lens and the focal length $f_2$ of the lens immediately following the first leans as

$$w_0'' = \frac{f_2 \times \lambda}{\pi \times w_o'} = \frac{f_2}{f_1} \times w_o.$$

In this embodiment the radius of the beam waist after any lens can be precisely determined. Thus, the illumination of the entrance pupil can be precisely controlled independent of the wavelength of the illumination beam.

In another preferred embodiment a lens of the optical intermediate imaging system immediately preceding the entrance pupil of the objective of the microscope is arranged at a distance from said entrance pupil equal to a focal length of the preceding lens. In this preferred embodiment, the wavefront radius of the illumination light beam at the entrance pupil of the objective is infinite. In other words, the rays forming the illumination light beam are parallel at the entrance pupil of the objective. Most objectives, in particular infinity corrected objectives, are designed such that their imaging properties are best for such parallel rays, e.g. parallel rays experience the least aberrations. Thus, this preferred embodiment allows to optimally use the objective of the microscope, e.g. for illuminating a specimen.

In another preferred embodiment the optical intermediate imaging system comprises a scanning element configured to scan the specimen with the illumination light beam. In this preferred embodiment, the angle of the illumination light beam in the entrance pupil can be adjusted. Since said angle determines the position onto which the objective directs the illumination light beam, different positions of the specimen may be illuminated without moving the specimen, which might disturb it.

In another preferred embodiment the scanning element is arranged at the position of a beam waist of the illumination light beam. Preferably, the scanning element is arranged at a plane conjugated to the plane of the objective pupil. In case of a single mirror as the scanning element the center of its tilting movement, i.e. its pivot point is arranged at the plane conjugated to the plane of the objective pupil. The plane conjugated to the plane of the objective pupil is typically the back focal plane of the objective and is typically equal to the primary telecentric plane and also the entrance aperture of the objective. Therefore, in this embodiment an image of the scan element is formed in the pupil of the microscope objective. In this preferred embodiment a so called descanned arrangement can be realized. That is an arrangement in which a light beam returning from the objective, e.g. fluorescence light emitted by the specimen, is directed by the scanning element into the direction from which the illumination light beam originated. Such descanned arrangements are used e.g. in several types of confocal microscopes.

In another preferred embodiment the optical fiber is a single mode fiber. Preferably the single mode fiber is a step index fiber, gradient index fiber, a photonic crystal fiber or a hollow core photonic crystal fiber. The increase of the mode field diameter with an increasing wavelength of step index fibers and gradient index fibers is more than 0.03%/nm, mostly more than 0.05%/nm and often more than 0.1%/nm. The mode field diameter of these optical fiber are in the terms of this application not essentially wavelength independent. In contrast, increase of the mode field diameter with an increasing wavelength of Photonic Crystal fibers is less than 0.03%/nm, mostly less than 0.02%/nm and often less than 0.01%/nm. Thus, the mode field diameter of these optical fiber are essentially wavelength independent.

The invention also relates to an optical illumination system for a fluorescence correlation spectroscope. The optical illumination system comprising an optical fiber configured to form an illumination light beam that is emitted from a fiber end thereof, and an optical intermediate imaging system. The optical intermediate imaging system is configured to form an optical image of the fiber end in an entrance pupil of an objective of the microscope and to form a predetermined number of intermediate optical images between the fiber end and the entrance pupil. An increase of a mode field diameter of the optical fiber with an in-creasing wavelength of the illumination light beam is less than 0.03 %/nm and the predetermined number of intermediate optical images is an odd number. Alternatively, an increase of the mode field diameter of the optical fiber with an increasing wavelength of the illumination light beam is greater than or equal to than 0.03 %/nm and the predetermined number of intermediate optical images is an even number.

In a preferred embodiment the fluorescence correlation spectroscope is a spectroscope or a microscope capable of performing fluorescence correlation spectroscopy, in particular fluorescence cross-correlation spectroscopy. A microscope being capable of performing spectroscopic measurements is regarded as a spectroscope according to the present document.

The optical illumination system for the fluorescence correlation spectroscope over illuminates or under illuminates the entrance pupil of the objective dependent on the wavelength allowing for a reliable control of the illumination of the entrance pupil. This is due to the beam diameter of the illumination light beam at the entrance pupil increasing with the wavelength. Over illuminating or under illuminating the entrance pupil changes the effective numerical aperture of the objective and thereby its lateral and axial resolution. The lateral resolution $\Delta r$ of the objective can be approximated in terms of the wavelength dependent numerical aperture NA and the wavelength $\lambda$ as

$$\Delta \mathrm{r} \approx 0.61 \frac{\lambda}{\mathrm{NA}},$$

and the axial resolution $r_z$ can be approximated in term of the refractive index n of the specimen as

$$r_z = \frac{2 \times n \times \lambda}{NA^2}.$$

Thus, both the lateral resolution $\Delta r$ and the axial resolution $r_z$ are essentially independent of the wavelength $\lambda$. The focus volume, which is proportional to the product of the lateral resolutions $\Delta r$ in both lateral directions and the axial resolution $r_z$, is also essentially independent of the wavelength $\lambda$ as is advantageous for fluorescence correlation spectroscopy.

The claimed optical illumination system for a fluorescence correlation spectroscope can be supplemented using the features of the dependent claims directed at the optical illumination system for a microscope described above.

The invention further relates to a microscope comprising the optical illumination system described above, the objective configured to direct the illumination light beam onto a specimen and to receive detection light from the specimen, and an optical detection system having a detector configured to receive the detection light.

In particular, the microscope comprises a processor configured to compute an auto correlation function of the detection detected by the detector. In this embodiment, the microscope may be used for fluorescence correlation spectroscopy.

In a preferred embodiment the microscope comprises a main beam splitter configured to separate the illumination light beam and the detection light. In particular, the beam splitter is configured to direct the illumination light beam into the direction of the entrance pupil and to direct the detection light onto the detector. In this embodiment, the illumination light and the detection light share a light path. Thus, the microscope according to this embodiment can be made very compact.

In another preferred embodiment the microscope comprises a single objective directed at the specimen. In this embodiment the objective used to direct the illumination light beam onto or into the specimen might be used for receiving the detection light. Thus, saving space in a sample space of the microscope. Further, if a cover slip is used to cover the specimen, the use of a single objective allows both the illumination light beam and the detection light to pass the coverslip perpendicular. This greatly reduces loss of light due to reflection and thus enhances the image quality of the microscope.

In another preferred embodiment the microscope is a confocal microscope. In particular, the microscope comprises a pinhole aperture arranged in front of the detector. Confocal microscopes have high optical resolution and contrast.

In another preferred embodiment the microscope comprises a light source configured to create illumination light, said light source being coupled to the optical fiber. The light source may be included in the microscope. In this preferred embodiment the device is particularly compact.

Preferably the light source is a laser light source. In particular, the light source may comprise more than one laser light source each having a different wavelength. The light source may also comprise a beam combiner element configured to combine two or more laser light beam of different wavelength each.

## Short Description of the Figures

Hereinafter, specific embodiments are described referring to the drawings, wherein:

Figure 1 is a schematic drawing of a microscope according to an embodiment;

Figure 2 is a schematic diagram of a part of an optical intermediate imaging system of the microscope according to Figure 1; and

Figure 3 is a schematic drawing of a microscope according to another embodiment.

## Detailed description

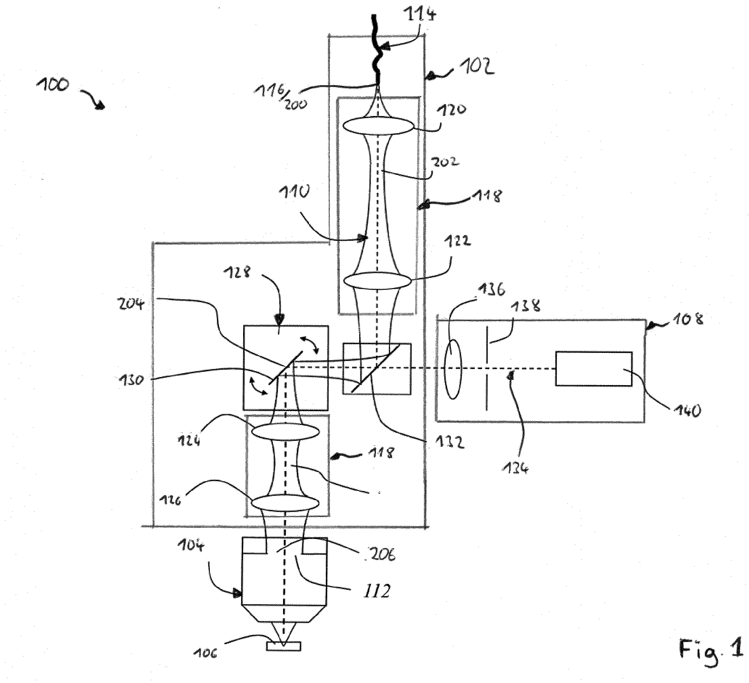

Figure 1 is a schematic drawing of a microscope 100 according to an embodiment. The microscope 100 comprises an optical illumination system 102, an objective 104 directed at a specimen 106, and a detection system 108.

The optical illumination system 102 is configured to direct an illumination light beam 110 into an entrance pupil 112 of the objective 104. Said optical illumination system 102 comprises an optical fiber 114 configured to form the illumination light beam 110 that is emitted from a fiber end 116 there-of. The optical fiber 114 is exemplarily implemented as a single mode fiber, whose increase of its mode field diameter with an increasing wavelength is less than 0.03 %/nm, e.g. a photonic crystal fiber. The intensity distribution of the illumination light beam 110 can be approximated by a normal distribution. The mode field diameter is then defined by the diameter of the illumination light beam 110 at which its intensity (power density) is reduced to $\frac{1}{e^2}$ of the maximum intensity, i.e. the intensity at the beam center of the illumination light beam 110.

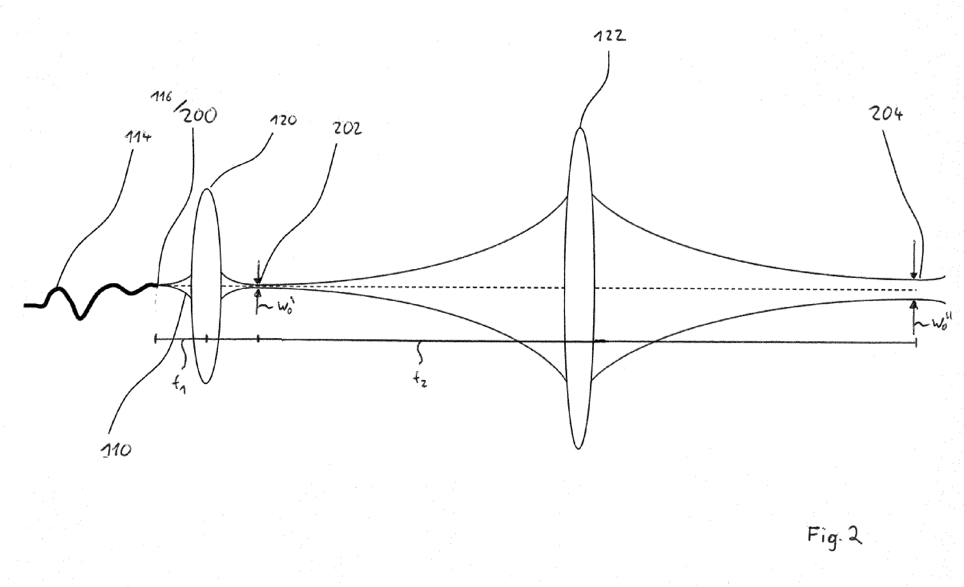

The optical illumination system 102 comprises an optical intermediate imaging system 118. The optical intermediate imaging system 118 comprising a first lens 120 arranged immediately following the fiber end 116 at a distance from a first beam waist 200 (see also Figure 2) of the illumination light beam 110 being equal to a focal length of the first lens 120. In the present embodiment, the first beam waist 200 is formed at the fiber end 116. Alternatively, the fiber end 116 may be configured such as to form the first beam waist 200 at any position between the first lens 120 and the fiber end 116.

The optical intermediate imaging system 118 further comprises a second lens 122, a third lens 124, and a fourth lens 126. The second lens 122 immediately follows the first lens 120 along a propagation direction of the illumination light beam 110, the third lens 124 immediately follows the second lens 122, and the fourth lens 126 immediately follows the third lens 124. Each of the four lenses 120, 122, 124, 126 is arranged at a distance from the preceding lens being equal to the sum of a focal length of the preceding lens and a focal length of the following lens. The fourth lens 126 immediately precedes the entrance pupil 112 of the objective 104 and is arranged at a distance from said entrance pupil 112 equal to a focal length of the fourth lens 126. A fifth beam waist 206 (see also Figure 2) is formed by the optical intermediate imaging system 118 at the position of the entrance pupil 112. The optical intermediate imaging system 118 is described in more detail below with reference to Figure 2.

The optical illumination system 102 comprises a scanning element 128 configured to tilt (change the angle of) the illumination light beam 110 within the entrance pupil 112 of the objective 104. The scanning element 128 is arranged between the second lens 122 and the third lens 124 at the position of a third beam waist 204 (see also Figure 2) of the illumination light beam 110 immediately following the second lens 122. In the present embodiment, the scanning element 128 is formed by a movable mirror 130, e.g. a galvanometer mirror. Alternatively, the scanning element 128 may be formed by any other beam deflections device, e.g. digital micromirror devices, acusto-optic deflectors.

The optical illumination system 102 further comprises a main beam splitter 132 arranged between the second lens 122 and the scanning element 128. The main beam splitter 132 is configured to separate the illumination light beam 110 and detection light 134 emitted by the specimen 106, e.g. fluorescence light. The main beam splitter 132 is further configured to direct the illumination light beam 110 onto the scanning element 128 and to direct the detection light 134 into the detection system 108.

The detection system 108 is configured to receive the detection light 134 and comprises a fifth lens 136, a pinhole aperture 138 and a detector 140. The fifth lens 136 focusses the incoming detection light 134 onto the pinhole aperture 138. The pinhole aperture 138 blocks out-of-focus light rays of the detection light 134 before the detection light 134 falls onto the detector 140.

Figure 2 shows a schematic diagram of a part of the optical intermediate imaging system 118 of the microscope 100 according to Figure 1. The part of the optical intermediate imaging system 118 shown in Figure 2 comprises the fiber end 116, the first lens 120 and the second lens 122. Further a second beam waist 202 of the illumination light beam 110 immediately following the first lens 120 is shown.

In thin lens approximation the radius $W_0'$ of the second beam waist 202 of the illumination light beam 110 can be expressed in terms of the radius $W_0$ of the first beam waist 200 of the illumination light beam 110, the focal length $f_1$ of the first lens 120 and the wavelength λ of the light of the illumination light as

$$w_0' = \frac{f_1 \times \lambda}{\pi \times w_o}.$$

The radius $W_0''$ of the third beam waist 204 of the illumination light beam 110 can be expressed in terms of the radius $W_0'$ of the second beam waist 202 of the illumination light beam 110 and the focal length $f_2$ of the second lens 122 as

$$w_0'' = \frac{f_2 \times \lambda}{\pi \times w_o'} = \frac{f_2}{f_1} \times w_o.$$

This means, after an even number of intermediate optical images in the optical illumination system 102, the radius of the beam waist has the same wavelength dependency as the radius of the first beam waist 200 at the fiber end 116, apart from chromatic aberrations. For an odd number of intermediate optical images the wavelength dependency of the radius of the beam waist is proportional to the wavelength and indirectly proportional to the wavelength dependence of the beam waist radius at the fiber end 116. The two proportionalities counteract each other, so that the radius of the beam waist is essentially independent of the wavelength of the illumination light beam 110 after an odd number of intermediate optical images.

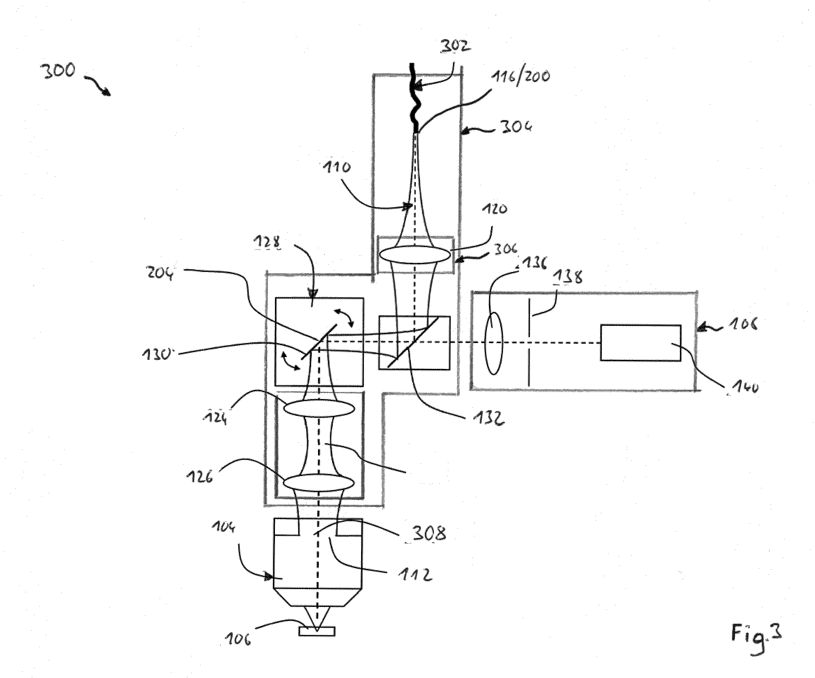

In the embodiment according to Figures 1 and 2 four intermediate images are formed. Thus, the radius of the fifth beam waist 206 at the entrance pupil 112 has the same wavelength dependency as the radius of the first beam waist 200 at the fiber end 116. An alternative embodiment of the optical intermediate imaging system 118 is described below with reference to Figure 3.

In another alternative embodiment, the optical fiber 114 has a wavelength dependent mode field diameter, i.e. the increase of its mode field diameter with an increasing wavelength is more than 0.03 %/nm. In particular, the optical fiber 114 may be a step index fiber or a gradient index fiber. In this embodiment, the radius of the fifth beam waist 206 at the entrance pupil 112 increases as the wavelength λ of the illumination light beam 110 increases. This over illuminates or under illuminates the entrance pupil 112 of the objective 104 dependent on the wavelength λ, thereby affecting the effective numerical aperture of the objective 104.

This can be used to control the lateral and axial resolution of the microscope 100. The lateral resolution Δr can be approximated in terms of the wavelength dependent numerical aperture NA and the wavelength λ as

$$\Delta r \approx 0.61 \frac{\lambda}{NA},$$

and the axial resolution $r_z$ can be approximated in term of the refractive index n of the specimen as

$$r_z = \frac{2 \times n \times \lambda}{NA^2}.$$

Thus, both the lateral resolution Δr and the axial resolution $r_z$ are essentially independent of the wavelength λ. Since the focus volume of the microscope 100, which is proportional to the product of the lateral resolutions Δr in both lateral directions and the axial resolution $r_z$, is also essentially independent of the wavelength $\lambda$ the microscope 100 of the present embodiment may be used in particular for fluorescence correlation spectroscopy.

Figure 3 is a schematic drawing of a microscope 300 according to another embodiment. The microscope 300 according to Figure 3 is distinguished from the microscope 100 according to Figures 1 and 2 in that the optical fiber 302 of the optical illumination system 304 has a wavelength dependent mode field diameter. In particular, the optical fiber 302 may be a step index fiber or a gradient index fiber.

The optical illumination system 304 of the microscope 300 according to Figure 3 is further distinguished in that the optical intermediate imaging system 306 comprises only three lenses 120, 124, 126, namely the first lens 120, the second lens 124, and the third lens 126. Thus, in the present embodiment the optical intermediate imaging system 306 realizes an odd number of intermediate images. The radius of the beam waist 308 at the position of the entrance pupil 112 is proportional to the wavelength of the illumination light beam 110 and indirectly proportional to the wavelength dependence of the radius of the first beam waist 200, i.e. at the fiber end 116. Thus, in this embodiment, the radius of the beam waist is essentially independent of the wavelength of the illumination light beam 110.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of Reference Signs

| | |
|---|---|
| 100 | Microscope |
| 102 | Optical illumination system |
| 104 | Objective |
| 106 | Specimen |
| 108 | Detection system |
| 110 | Illumination light beam |
| 112 | Entrance pupil |
| 114 | Optical fiber |
| 116 | Fiber end |
| 118 | Optical intermediate imaging system |
| 120, 122, 124, 126 | Lens |
| 128 | Scanning element |
| 130 | Movable mirror |
| 132 | Main beam splitter |
| 134 | Detection light |
| 136 | Lens |
| 138 | Pinhole aperture |
| 140 | Detector |
| 200, 202, 204, 206 | Beam waist |
| 300 | Microscope |
| 302 | Optical fiber |
| 304 | Optical illumination system |
| 306 | Optical intermediate imaging system |

## Claims

**1.** An optical illumination system (102, 304) for a microscope (100, 300), comprising:

an optical fiber (114, 302) configured to form an illumination light beam (110) that is emitted from a fiber end (116) thereof, and

an optical intermediate imaging system (118, 306) configured to form an optical image of the fiber end (116) in an entrance pupil (112) of an objective (104) of the microscope (100, 300) and to form a predetermined number of intermediate optical images between the fiber end (116) and the entrance pupil (112), wherein an increase of a mode field diameter of the optical fiber (114, 302) with an increasing wavelength of the illumination light beam (110) is less than 0.03 %/nm and the predetermined number of intermediate optical images is an even number, or
wherein an increase of the mode field diameter of the optical fiber (114, 302) with an increasing wavelength of the illumination light beam (110) is greater than or equal to 0.03 %/nm and the predetermined number of intermediate optical images is an odd number.

**2.** An optical illumination system (102, 304) for a fluorescence correlation spectroscope (100, 300), comprising:

an optical fiber (114, 302) configured to form an illumination light beam (110) that is emitted from a fiber end (116) thereof, and
an optical intermediate imaging system (118, 306) configured to form an optical image of the fiber end (116) in an entrance pupil (112) of an objective (104) of the microscope (100, 300) and to form a predetermined number of intermediate optical images between the fiber end (116) and the entrance pupil (112), wherein an increase of a mode field diameter of the optical fiber (114, 302) with an increasing wavelength of the illumination light beam (110) is less than 0.03 %/nm and the predetermined number of intermediate optical images is an odd number, or
wherein an increase of the mode field diameter of the optical fiber (114, 302) with an increasing wavelength of the illumination light beam (110) is greater than or equal to 0.03 %/nm and the predetermined number of intermediate optical images is an even number.

**3.** The optical illumination system (102, 304) according to claim 1 or 2, wherein the optical intermediate imaging system (118, 306) comprises a first lens (120) arranged at a distance from the fiber end (116) being equal to a focal length of the first lens (120).

**4.** The optical illumination system (102, 304) according to one of the preceding claims, wherein the optical intermediate imaging system (118, 306) comprises a first lens (120) arranged at a distance from a first beam waist (200) of the illumination light beam (110) being equal to a focal length of the first lens (120).

**5.** The optical illumination system (102, 304) according to claim 3 or 4, wherein the optical intermediate imaging system (118, 306) comprises at least two lenses (120, 122, 124, 126), one of which being the first lens (120), and wherein one of the at least two lenses (120, 122, 124, 126) immediately following a preceding lens of the at least two lenses (120, 122, 124, 126) along a propagation direction of the illumination light beam (110) is arranged at a distance from the preceding lens being equal to the sum of a focal length of the preceding lens and a focal length of the following lens.

**6.** The optical illumination system (102, 304) according to one of the claims 3 to 5, wherein a lens (126) of the optical intermediate imaging system (118, 306) immediately preceding the entrance pupil (112) of the objective (104) of the microscope (100, 300) is arranged at a distance from said entrance pupil (112) equal to a focal length of the preceding lens (126).

**7.** The optical illumination system (102, 304) according to one of the preceding claims, wherein the optical intermediate imaging system (118, 306) comprises a scanning element (128) configured to scan a specimen (106) with the illumination light beam (110).

**8.** The optical illumination system (102, 304) according to claim 7, wherein the scanning element (128) is arranged at the position of a beam waist (204) of the illumination light beam (110).

**9.** The optical illumination system (102, 304) according to one of the preceding claims, wherein the optical fiber (114, 302) is a single mode fiber.

**10.** The optical illumination system (102, 304) according to claim 9, wherein the single mode fiber is a step index fiber, a gradient index fiber, a photonic crystal fiber or a hollow core photonic crystal fiber.

**11.** A microscope (100, 300) comprising:

the optical illumination system (102, 304) according to one of the preceding claims,
the objective (104) configured to direct the illumination light beam (110) onto a specimen (106) and to receive detection light (134) from the specimen (106), and

an optical detection system (108) having a detector (140) configured to receive the detection light (134).

**12.** The microscope (100, 300) according claim 11, wherein the microscope (100, 300) comprises a main beam splitter (132) configured to separate the illumination light beam (110) and the detection light (134).

**13.** The microscope (100, 300) according to claim 11 or 12, wherein the microscope (100, 300) is a confocal microscope (100, 300).

**14.** The microscope (100, 300) according to one of the claims 11 to 13, and a light source configured to create illumination light, said light source being coupled to the optical fiber (114, 302).

**15.** The microscope (100, 300) according to claim 14, wherein the light source is a laser light source.

Fig. 1
100
102
104
106
108
110
112
114
116/200
118
120
122
124
126
128
130
132
134
136
138
140
202
204
206

204
122
202
120
116
200
114
110
Fig. 2

300
302
304
116/200
120
306
136
138
140
132
110
128
204
130
124
126
104
106
308
112
Fig.3

Europäisches
Patentamt
European
Patent Office
Office européen
des brevets

# EUROPEAN SEARCH REPORT

Application Number
EP 20 16 8037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 657 581 A1 (OLYMPUS CORP [JP]) 17 May 2006 (2006-05-17) * figure 1 * ----- | 1-15 | INV. G02B21/00 G02B21/08 |
| T | EP 1 126 302 A2 (NIPPON SHEET GLASS CO LTD [JP]) 22 August 2001 (2001-08-22) * figure 3 * ----- | | |
| A | WO 2016/206700 A1 (NKT PHOTONICS AS [DK]) 29 December 2016 (2016-12-29) * page 8, lines 1-3 * ----- | 1-15 | |
| A | WO 99/44488 A2 (UNIV TEXAS [US]) 10 September 1999 (1999-09-10) * page 14, lines 12-17 * ----- | 1-15 | |

TECHNICAL FIELDS SEARCHED (IPC)

G02B

The present search report has been drawn up for all claims

1

| Place of search | Date of completion of the search | Examiner |
|---|---|---|
| Munich | 5 August 2020 | Serbin, Jesper |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 16 8037

This annex lists the patent family members relating to the patent documents cited in the above-mentioned European search report. The members are as contained in the European Patent Office EDP file on
The European Patent Office is in no way liable for these particulars which are merely given for the purpose of information.

05-08-2020

| Patent document cited in search report | Publication date | Patent family member(s) | Publication date |
|---|---|---|---|
| EP 1657581 A1 | 17-05-2006 | DE 602005004097 T2 | 08-05-2008 |
| | | EP 1657581 A1 | 17-05-2006 |
| | | JP 2006139181 A | 01-06-2006 |
| | | US 2006103922 A1 | 18-05-2006 |
| EP 1126302 A2 | 22-08-2001 | EP 1126302 A2 | 22-08-2001 |
| | | JP 2001305376 A | 31-10-2001 |
| | | US 2001024548 A1 | 27-09-2001 |
| WO 2016206700 A1 | 29-12-2016 | CN 107710040 A | 16-02-2018 |
| | | CN 111239889 A | 05-06-2020 |
| | | EP 3314318 A1 | 02-05-2018 |
| | | HK 1250793 A1 | 11-01-2019 |
| | | JP 2018527601 A | 20-09-2018 |
| | | KR 20180019739 A | 26-02-2018 |
| | | US 2018188447 A1 | 05-07-2018 |
| | | WO 2016206700 A1 | 29-12-2016 |
| WO 9944488 A2 | 10-09-1999 | AU 2896299 A | 20-09-1999 |
| | | CA 2322212 A1 | 10-09-1999 |
| | | DE 69926116 T2 | 20-04-2006 |
| | | EP 1059871 A2 | 20-12-2000 |
| | | HK 1032726 A1 | 24-02-2006 |
| | | JP 4456270 B2 | 28-04-2010 |
| | | JP 2002505200 A | 19-02-2002 |
| | | WO 9944488 A2 | 10-09-1999 |

EPO FORM P0459

For more details about this annex : see Official Journal of the European Patent Office, No. 12/82